# EUROPEAN PATENT SPECIFICATION

(11) **EP 1 838 967 B1**
(45) Date of publication and mention of the grant of the patent: **13.12.2017**
(21) Application number: 06718617.1
(22) Date of filing: 18.01.2006
(51) Int. Cl.: F15C 1/04, F16K 99/00, F16K 13/10

(54) **TEMPERATURE-CONTROLLED VARIABLE FLUIDIC RESISTANCE DEVICE**
TEMPERATURGESTEUERTE VORRICHTUNG MIT VARIABLER FLÜSSIGKEITSRESISTENZ
DISPOSITIF A RESISTANCE FLUIDIQUE VARIABLE, A REGULATION THERMIQUE

(30) Priority: 21.01.2005 US 645804 P
(43) Date of publication of application: 03.10.2007
(73) Proprietor: Waters Technologies Corporation, Milford, MA 01757 (US)
(72) Inventor: GERHARDT, Geoff, C., Milbury, Massachusetts 01527 (US); CHARLTON, Christopher, C., Benicia, California 94510 (US)
(74) Representative: Harding, Andrew Philip
(86) International application number: PCT/US2006/001564
(87) International publication number: WO 2006/078634

(56) References cited:
- WO-A1-2004/053370
- US-A- 4 989 626
- US-A- 5 975 856
- US-A1- 2002 096 222
- US-A1- 2003 094 206

## Description

### FIELD OF THE INVENTION

This invention relates generally to control of fluid in analytical processes and more particularly to fluid control by the use of a temperature controlled variable fluidic resistance element in liquid chromatography.

### BACKGROUND OF THE INVENTION

Liquid flow control systems typically utilize a flow sensor coupled to a variable resistance element such as a needle or pinch valve. While these mechanical valves work very well for the large-scale applications that these flow controllers are used for (i.e. controlling flows >100 uL/min), for precise, rapid control of flows of <100 uL/min, these mechanical valves are difficult to construct and are unreliable. Typically, these valves work by restricting the port through which liquid passes. As the control flow rates are decreased to flows <100 uL/min, dimensions of these restriction paths become very small, and controlling manufacturing tolerances to allow linear control of valves in this region are difficult. In addition, these valves use moving parts which have finite lifetimes due to wear issues.

The viscosity of most fluids changes with temperature. Because of this, the pressure required to force a fluid through a fixed restriction element will vary with the fluid's temperature. Prior attempts to control fluid flow with temperature have been shown in LeBlanc et al (LeBlanc, J.C., Rev.Sci.Instrum. Vol. 62, No. 6, June 1991, 1642-1646). The apparatus of Leblanc used a length of small diameter tubing immersed in a water bath at the exit of a HPLC instrument to control fluid flow through a column. By changing the temperature of the water bath in response to the flow rate monitored by a flow sensor, Leblanc was able to demonstrate flow control by changing the viscosity of the fluid. While Leblanc demonstrated flow control via manipulation of a fluid's viscosity through a restrictor, the control was limited by a large thermal mass and resulting time constant of the water bath. In addition, the temperature range controlled by the method of Leblanc was further limited to the physical limitations of the water bath.

Commercial fluid-flow controllers typically employ a design having a fluid-pressure source in fluid communication with a flow sensor, which, in turn, is in fluid communication with a variable restrictor. The flow sensor and variable restrictor are in communication with a flow controller. In prior art embodiments, a needle valve is used as a variable restrictor. While needle valve restrictors work well for large-scale systems, to control low flow rates (i.e. <50 uL/min), in smaller scales, the miniature dimensions of such needle valves systems make them difficult and expensive to construct as high-tolerance machining equipment is needed. Additionally, for high-pressure systems (i.e. >500 psi), reliable liquid seals are required to prevent leakage of valve to atmospheric pressure. Unfortunately, these needle-valve systems have moving parts that can wear with use.

US-A-4989626 discloses an apparatus for opening and closing a channel for a liquid, by solidifying or melting this liquid by heating or cooling.

### SUMMARY OF THE INVENTION

The present invention provides a variable fluidic restriction element that is amenable to virtually all flow ranges and particularly low flow ranges (i.e. <100 uL/min), with no moving parts providing a longer lifetime than prior art mechanical devices.

The apparatus according to the invention advantageously solves problems associated with variable restriction flow control devices by providing temperature-controlled variable-restriction devices that use properties of the viscosity of solvents to adjust flow control within a liquid flow system.

A thermally controlled variable-restrictor device, according to one illustrative embodiment of the invention, retains the unique fluid control possibilities that can be achieved by temperature-induced viscosity changes (i.e. a solid-state flow control device, no moving parts, no seals), while allowing fast variable fluid control by employing a thermo-electric heater-cooler in intimate contact with the variable fluid restrictor to effect rapid thermal changes in the flowing fluid allowing faster flow control than is possible with prior art approaches such as a water bath. The permeability and flow rate of fluids through the variable fluidic restrictor according to the invention can be manipulated by changing the temperature of the variable fluidic restrictor.

Advantageously, the low thermal mass of the variable fluidic restrictor according to the invention allows rapid thermal changes with thermoelectric devices such as Peltier elements or resistive heaters. Because of the low thermal mass, rapid, sub-second changes can be made to the permeability of the variable fluidic restrictor.

In addition to the variable restrictor device according to the invention, several illustrative embodiments will be described using the low mass fast-responding thermally-controlled variable restrictor according to the invention.

### BRIEF DESCRIPTION OF DRAWINGS

The foregoing and other features and advantages of the present invention will be better understood from the following detailed description of illustrative embodiments, taken in conjunction with the accompanying drawings in which:
Fig. 1A is a schematic diagram modeling a temperature controlled variable fluidic restrictor, in accordance with an exemplary embodiment of the invention;
Fig. 1B is a schematic diagram modeling a temperature controlled variable fluidic restrictor having a resistance heater element, in accordance with an exemplary embodiment of the invention;
Fig. 2 is a graphic representation between the temperature and viscosity of water/acetonitrile mixtures; and
Fig. 3 is a schematic diagram modeling a flow control system employing a temperature-controlled variable restrictor in accordance with an exemplary embodiment of the invention.

### DETAILED DESCRIPTION OF THE INVENTION

Detailed embodiments of the present invention are disclosed herein, however, it is to be understood that the disclosed embodiments are merely exemplary of the invention, which may be embodied in various forms. Therefore, specific functional details disclosed herein are not to be interpreted as limiting, but merely as a basis for the claims and as a representative basis for teaching one skilled in the art to variously employ the present invention in virtually any appropriately detailed embodiment.

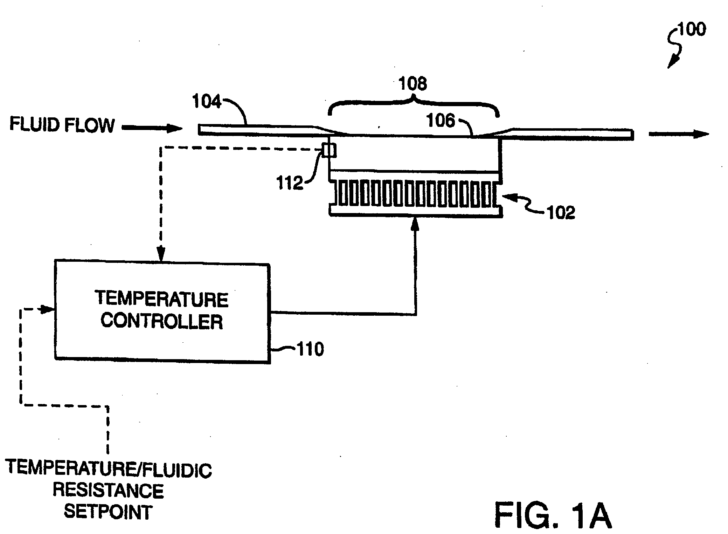

Turning to FIG. 1A, a schematic of a thermally-controlled variable restrictor 100 according to the invention is shown. This illustrative embodiment uses a single-stage Peltier thermo-electric heat pump 102 to heat or cool a length of tubing 104 having a flattened section 106 to effect a restriction element 108 in contact with a hot or cold face of the Peltier thermo-electric heat pump 102. Although the Peltier thermo-electric heat pump 102 in this illustrative embodiment, is used to heat or cool the restriction element 108, it is contemplated within the scope of the invention that the restriction element's 108 temperature could also be controlled by passing an electric current through the restriction element 108, or through an electrically resistive element in thermal contact with the restriction element 108.

As shown in FIG. 1A a temperature controller 110 uses a restriction element thermocouple 112 to monitor the temperature of the restriction element 108. The restriction element thermocouple 112 facilitates feedback to control the current applied to the Peltier thermo-electric heat pump 102 (and/or resistive heater, or cold/heat source(s)) maintaining a substantially constant restriction element temperature set point and hence substantially constant fluidic resistance set point.

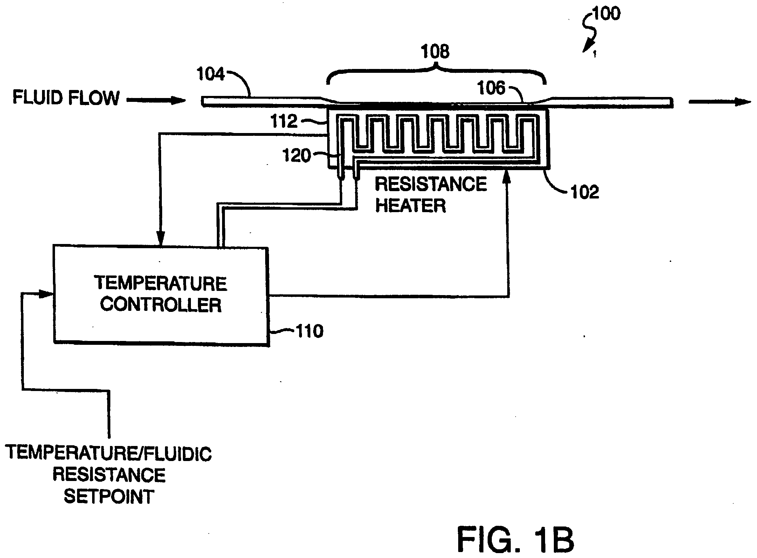

In an alternative illustrative embodiment depicted in FIG. 1B a resistive heater 120 can be used alone without a Peltier thermo-electric heat pump 102 relying on passive cooling to lower the temperature of the fluids within the restriction element 108, or in conjunction with the Peltier thermo-electric heat pump 102 where the heat pump 102 cools a thermal block in thermal contact with the flattened section 106 of tubing forming the fluidic restriction element 108. In this alternative illustrative embodiment, the resistive heater overcomes the cooling thermal current provided by the cold face of the Peltier thermo-electric heat pump 102 to heat the fluidic restriction. This alternative illustrative embodiment provides a more rapid thermal change by using a large thermal accumulator. Using this alternative illustrative embodiment, several fluidic restriction elements can be cooled by a single Peltier thermo-electric heat pump and their individual temperatures can be controlled by individual resistance heaters that are in thermal contact with the individual fluidic restriction elements.

In the illustrative embodiment as shown in FIG. 1A and 1B, the flattened length of tubing 106 forms the restriction element 108. It is contemplated within the scope of the invention that various restriction elements can be used, such as, but not limited to, tubing with various internal geometric shapes, small-bore tubing, tubing packed with particles, a frit or the like. Although, illustrative embodiments described here are mainly concerned with controlling flow in the µL/min to nL/min range, fixed restriction elements that will generate sufficient restriction in this flow regime are necessarily of small dimensions. It is contemplated within the scope of the invention that in addition to macro-scale restriction elements, that microfluidic or MEMS-based planar structures such as planar serpentine channels or channels filled with a porous medium such as bed of particles or porous monolithic structure are within the scope of the invention.

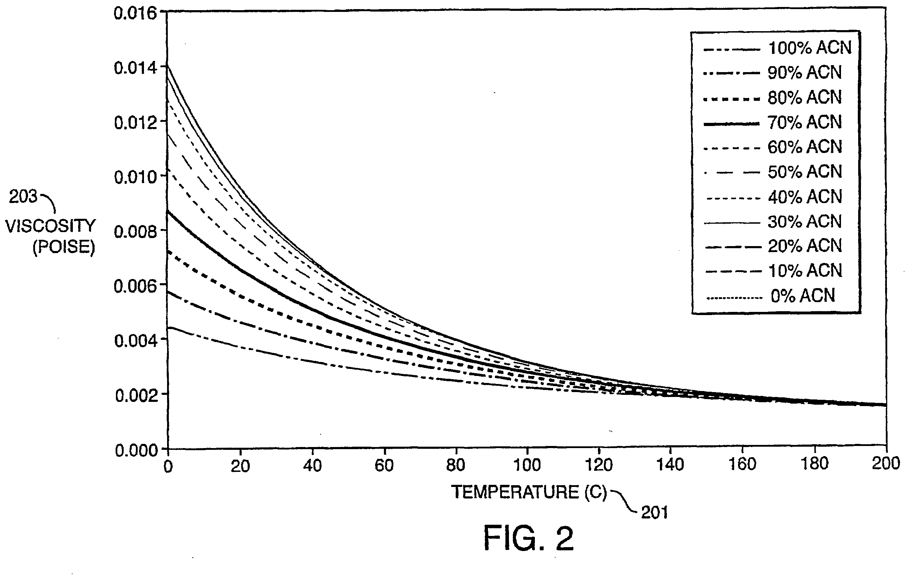

As shown in FIG. 2, the viscosity of fluids decrease as their temperature is increased. FIG. 2 is a graphic representation between temperature 201 and viscosity 203 of water/acetonitrile mixtures representing how the viscosity decreases as the temperature is increased.

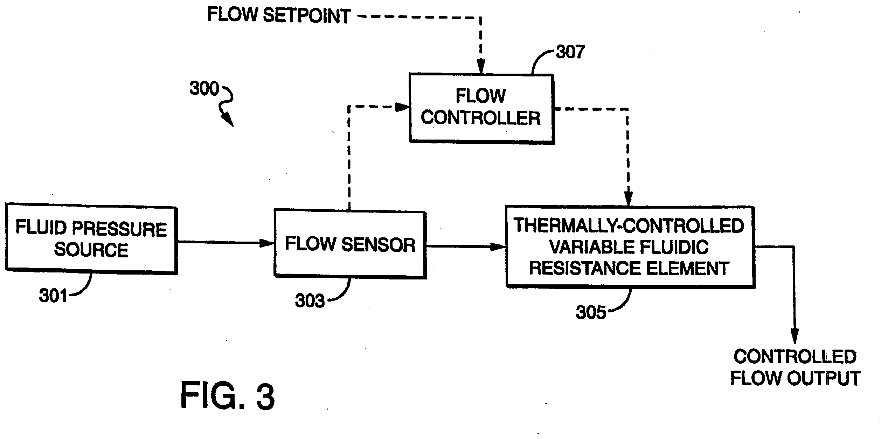

Turning to FIG. 3, a schematic showing flow control system 300 employing the temperature-controlled variable restrictor according to the invention is shown. As is known in the art, a number of commercial fluid flow controllers employ a design having a fluid pressure source 301 in fluid communication to a flow sensor 303, which is in fluid communication with a variable restrictor 305. The flow sensor 303 and variable restrictor 305 are in communication with a flow controller 307. In prior art embodiments of flow control systems, a needle valve is used as a variable restrictor. According to the invention the variable restrictor 305 is a thermally controlled variable restrictor, which in one illustrative embodiment uses a Peltier thermo-electric heat pump to vary its temperature. Advantageously, the temperature-controlled variable restrictor according to the invention is a solid-state system that is inherently sealed having no moving parts. The thermally controlled variable restrictor 305 according to the invention is able to be scaled to small flow rates very easily.

As shown in FIG. 3, the variable restrictor 305 according to the invention can be used within a flow control system 300 having a flow sensor 303 in fluid communication with a variable restrictor 305 according to the invention. In one illustrative embodiment commercially available low-flow flow rate sensors such as µ-FLOW Mass Flow Meter, available from Bronkhorst, RUURLO, The Netherlands, Liquid Micro Mass Flow Meter SLG1430, available from Sensirion, Zurichm, Switzerland, or the like may be used in the flow control system 300.

Although, the variable restrictor device within the illustrative examples are shown in single fluidic circuits, it should be appreciated by those skilled in the art that the variable restrictor device can be utilized in a parallel configuration within solvent gradient systems and such parallel configurations can be used to form a selected solvent gradient composition. Likewise, it will be appreciated that multiple variable restrictor device according to the invention can be utilized within a serial configuration within flow control systems.

Although, the variable restrictor device within the illustrative examples are shown utilizing thermo-electric heat pumps or resistive electric elements to vary temperatures, it should be appreciated by those skilled in the art that temperature changes can be effected by the used of heated or cool gases or liquids.

Although, the variable restrictor device within the illustrative examples are shown to vary flow rates by temperature induced viscosity changes in fluids flowing through such a device, it should be appreciated by those skilled in the art the fluid flow can be additionally effected by temperature induced physical changes in the configuration of fluid channels.

Although, the variable restrictor device within the illustrative examples utilize a flow controller in communication with a flow sensor and a thermo-electric heat pump to adjust flow rate, it should be appreciated by those skilled in the art that fluid flow can be controlled by pre-selected temperatures within the thermal faces of the thermo-electric heat pump.

While the invention has been described with reference to illustrative embodiments, it will be understood by those skilled in the art that various other changes, omissions and/or additions may be made and substantial equivalents may be substituted for elements thereof without departing from the scope of the invention. In addition, many modifications may be made to adapt a particular situation or material to the teachings of the invention without departing from the scope thereof. Therefore, it is intended that the invention not be limited to the particular embodiment disclosed for carrying out this invention, but that the invention will include all embodiments falling within the scope of the appended claims. Moreover, unless specifically stated any use of the terms first, second, etc. do not denote any order or importance, but rather the terms first, second, etc. are used to distinguish one element from another.

## Claims

1. An apparatus (100) for variably restricting a flow of a fluid, comprising:
a tubing (104) for the flow of the fluid, wherein a flattened length of said tubing (104) forms a restriction element (108),and means for heating and cooling (102) the restriction element (108), wherein said means for heating and cooling (102) is provided by a single-stage Peltier thermo-electric heat pump (102) and wherein said restriction element (108) is in intimate contact with the hot or cold face of said single-stage Peltier thermo-electric heat pump (102), and means (110) for controlling the means for heating and cooling (102).

2. The apparatus (100) of claim 1, further comprising a temperature controller (110) and a restriction element thermocouple (112) to monitor the temperature of the restriction element (108).

3. The use of the apparatus (100) of claim 1 or 2 in a flow control system (300), wherein the flow control system (300) comprises a fluid pressure source (301), a fluid flow sensor (303) and a flow controller (307), with the fluid pressure source (301) being in fluid communication with the flow sensor (303) which is in communication with the thermally controlled restriction element (108), and the flow sensor (303) and the thermally controlled restriction element (108) being in communication with the flow controller (307).

## Patentansprüche

1. Vorrichtung (100) zur variablen Drosselung eines Fluidflusses, umfassend:
eine Rohrleitung (104) für den Fluidfluss, wobei eine abgeflachte Länge der Rohrleitung (104) ein Drosselelement (108) ausbildet, und eine Einrichtung (102) zum Erwärmen und Kühlen des Drosselelements (108), wobei die Einrichtung (102) zum Erwärmen und Kühlen durch eine einstufige Peltier-thermoelektrische-Heizpumpe (102) bereitgestellt ist und wobei das Drosselelement (108) im engen Kontakt mit der kalten oder der heißen Seite der einstufigen Peltierthermoelektrischen-Heizpumpe (102) ist, und eine Einrichtung (110) zum Steuern der Einrichtung (102) zum Erwärmen und Kühlen.

2. Vorrichtung (100) nach Anspruch 1, die ferner eine Temperatursteuereinrichtung (110) und ein Thermoelement (112) für das Drosselelement umfasst, um die Temperatur des Drosselelements (108) zu überwachen.

3. Verwendung der Vorrichtung (100) gemäß Anspruch 1 oder 2 in einem Flusssteuerungssystem (300), wobei das Flusssteuerungssystem (300) eine Fluiddruckquelle (301) umfasst, einen Fluidflusssensor (303) und eine Flusssteuerung (307), wobei die Fluiddruckquelle (301) in fluider Kommunikation mit dem Flusssensor (303) steht, der in Kommunikation mit dem thermisch gesteuerten Drosselelement (108) steht, und wobei der Flusssensor (303) und das thermisch gesteuerte Drosselelement (108) in Kommunikation mit der Flusssteuerung (307) stehen.

## Revendications

1. Dispositif (100) de restriction variable de l'écoulement d'un fluide, comprenant :
un tube (104) pour l'écoulement du fluide, dont une certaine longueur aplatie forme un élément de restriction (108), des moyens de chauffage et de refroidissement (102) de l'élément de restriction (108), les moyens de chauffage et de refroidissement (102) étant fournis par une pompe à chaleur thermoélectrique à effet Peltier à un étage (102) et ledit élément de restriction (108) étant en contact étroit avec le côté chaud ou froid de ladite pompe à chaleur thermoélectrique à effet Peltier à un étage (102), et des moyens de régulation (110) pour les moyens de chauffage et le refroidissement (102).

2. Dispositif (100) selon la revendication 1, comprenant en plus un régulateur de température (110) et un thermocouple (112) sur l'élément de restriction pour surveiller la température de l'élément de restriction (108).

3. Utilisation du dispositif (100) selon la revendication 1 ou 2 dans un système de régulation de débit (300), le système de régulation de débit (300) comprenant une source de fluide sous pression (301), un capteur de débit de fluide (303) et un régulateur de débit (307), la source de pression de fluide (301) étant en communication fluidique avec le capteur de débit (303) qui est lui-même en communication avec l'élément de restriction régulé en température (108), et le capteur de débit (303) et l'élément de restriction (108) régulé en température étant en communication avec le régulateur de débit (307).
